# EUROPEAN PATENT SPECIFICATION

(11) **EP 1 846 267 B1**
(45) Date of publication and mention of the grant of the patent: **11.08.2010**
(21) Application number: 06715881.6
(22) Date of filing: 06.02.2006
(51) Int. Cl.: B60R 13/08

(54) **THE MEMBER FOR HEADLINER ON MOTOR VEHICLES**
ELEMENT FÜR EINE DACHVERKLEIDUNG VON KRAFTFAHRZEUGEN
ELEMENT POUR GARNITURE DE TOIT POUR VEHICULES A MOTEUR

(30) Priority: 07.02.2005 KR 20050011238
(43) Date of publication of application: 24.10.2007
(73) Proprietor: Li & S CO., LTD ., Jiksan-myeon Cheonan Ch'ungch'ong namdo 330-815 (KR)
(72) Inventor: SEO, Duck-Hyun,1105, Samho Park Tower, Gyungi-do 442-835 (KR)
(74) Representative: Walcher, Armin
(86) International application number: PCT/KR2006/000429
(87) International publication number: WO 2006/083144

(56) References cited:
- JP-A- 08 187 805
- KR-A- 20030 000 746
- KR-A- 20030 080 381
- KR-A- 20040 088 434
- KR-U- 19980 059 686
- US-A- 4 840 832
- US-A1- 2001 036 788

## Description

### Technical Field

The present invention relates to a recyclable eco-friendly automobile headliner comprising an expanded composite sheet formed by integrally expansion molding a base material, comprising a sheath-core bicomponent fiber composed of a high-melting-point core component and a low-melting-point sheath component, with a reinforcing material composed of a functional thermoplastic organic fiber. The inventive automobile headliner shows the same thermal resistance, dimensional stability and impact resistance as those of the prior automobile headliner, has improved sound absorption and thermal insulation compared to the prior automobile headliner because it utilizes a functional thermoplastic organic fiber having excellent elasticity and expandability, has excellent impact absorption and elasticity because it uses an expanded base material, has excellent impact absorption and elastic properties because it uses the expanded substrate having a weight of 800-1600 g/m² and a thickness of 4-8 mm, comprises a covering material (nonwoven fabric or cloth) bonded to the substrate using the difference in melting points and without using any adhesive harmful to the human body, and has useful effects in terms of the improvement of the working environment and the maintenance of human health by using eco-friendly recyclable materials in place of the prior thermosetting resin and inorganic fiber.

### Background Art

In general, an automobile headliner is attached to the interior ceiling of an automobile in order to absorb noise from the outside and to improve the thermal insulation of the automobile.

The prior automobile headliners have a three-layer structure consisting of a covering material composed of a nonwoven polyester fabrics, a PVC sheet, or the like, a cushion material composed of polypropylene or polyethylene foam, and a base material composed of resin felt, glass wool, paper board, etc.

One of these prior automobile headliners is a product comprising a combination of polyurethane foam and glass mat and a sandwich structure of polypropylene sheet/ polypropylene foam sheet.

Automobile headliner manufacturers apply an irradiation-crosslinked PP foam sheet having tactile sensation, moldability and impact absorption for panel layers in order to develop and adopt products that satisfy an expansion ratio of 20, a thickness of 5 mm, a thermal resistance of more than 110 °C, rigidity, dimensional stability, etc. Particularly, an EVA hot melt film, which is inexpensive and allows various processes to be easily conducted, was mainly applied in the adhesive lamination of each material, but a PP-based material, which has good interfacial adhesion, thermal resistance and process applicability and can maximize recyclability because it contains components similar to a main material, has also been used. There is also an effort to form a cushion layer having the same material as that of a panel layer using an irradiation-crosslinked polypropylene sheet so as to make recycling easy. Also, the material of a covering layer is selected in consideration of physical properties, such as flame retardancy and thermal resistance, and visual properties, such as gloss or color.

Meanwhile, important evaluation items for the automobile headliner are deformation and dimensional stability according to an environmental test. The environmental test is a test item to evaluate the deformation characteristics of the material by simulating various unfavorable conditions upon actual application of a product and is an important test method to estimate the actual applicability of a material by estimating the deformation of the material under continuous conditions, such as a high temperature above 85 °C, a low temperature below -30 °C, and a humidity of 95%.

However, polypropylene (PP), polyamide (nylon) and polyester (PET), which are generally used organic fibers, have limited usability as engineering materials due to a low glass transition temperature of 70-80 °C. In order to use these organic fibers as engineering materials by overcoming their low thermal resistance, a method of improving the thermal resistance of the organic fibers by reinforcing the organic fibers with carbon fiber, glass fiber or inorganic fiber, or by adding organic/inorganic filler and thermosetting resin is mainly used.

Also, an automobile headliner using polyurethane foam, a typically used material, has good sound absorption, but has problems in that it has poor weather resistance, leading to a reduction in durability, such as discoloration or foam cell crumbling upon long-term use, and is difficult to recycle due to the use of an adhesive to achieve bonding with other materials, such as the glass fiber used for strength reinforcement. Other problems include increased weight, caused by the lamination of a different material, and the generation of an offensive odor, dust, and noise during production thereof, caused by the use of a material containing hazardous components and the use of thermosetting resins.

US 2001/0036788 A1 describes a headliner made from laminate comprising a core layer sandwiched between two stiffening layers wherein the core layer comprises fine thermosplastic fibers and the stiffening layer also comprises thermoplastic fibers having a higher rigidy.

KR 2003 0000746 A describes a sound absorbing material comprising an upper layer of 30 to 50 % PET regular type, 20 to 50 % of PET modified cross section rectangular type and 20 to 30 % PET/PE, PET/PP, PETIPA and/or PET/converted PET (sheat core type binder fiber having low melting point), a middle layer comprising of 50 to 60 % of PET having a modified cross section, 10 to 30 % of conjugated hollow fiber and 20 to 30 % binder fiber and a bottom layer comprising 30 to 50 % PET rectangular type fiber, 40 to 50 % of PET modified cross section rectangular type and 20 to 30 % PET/PE, PET/PP, PET/PA and/or PET/converted PET.

### Disclosure of Invention

### Technical Problem

The present invention has been made to solve the above-mentioned problems, and it is an object of the present invention to provide an automobile headliner, which shows the same thermal resistance, dimensional stability and impact resistance as those of a prior automobile headliner by utilizing an expanded composite sheet having a single-layer structure of lightweight material, has improved sound absorption and thermal insulation compared to the prior automobile headliner due to the use of a functional thermoplastic organic fiber having excellent elasticity and expandability, has excellent impact absorption and elasticity due to the use of an expanded substrate, comprises a covering material bonded to the substrate using the difference in melting points and without using any adhesive harmful to the human body, and has useful effects in terms of the improvement of the working environment and the maintenance of human health due to the use of eco-friendly recyclable materials in place of the prior thermosetting resin and inorganic fiber.

### Technical Solution

To achieve the above object, the present invention provides an automobile headliner comprising an expanded composite sheet formed by integrally expansion molding a base material, comprising a sheath-core bicomponent fiber composed of a high-melting-point core component and a low-melting-point sheath component, with a reinforcing material composed of a functional thermoplastic organic fiber.

Preferably, the content of the base material is 40-70 wt%, and the content of the reinforcing material is 30-60 wt%.

More preferably, the content of the base material is 40-60 wt%, and the content of the reinforcing material is 40-60 wt%.

Still more preferably, the content of the base material is 50-60 wt%, and the content of the reinforcing material is 40-50 wt%.

Preferably, the weight ratio of the base material : the reinforcing material is 50:50 or 60:40.

Preferably, the sheath/core bicomponent fiber is a bicomponent fiber produced using a mixture of 30-50 vol% of the sheath component and 50-70 vol%of the core component, having a melting point different from that of the sheath component, and is at least one selected from the group consisting of a bicomponent fiber composed of low-melting-point polyester copolymer (CoPET) as the sheath component and polyester (PET) as the core component, a bicomponent fiber composed of polyester glycol (PETG) as the sheath component and polyester (PET) as the core component, a bicomponent fiber composed of high-density polyethylene (HDPE) as the sheath component and polyester (PET) as the core component, a bicomponent fiber composed of high-density polyethylene (HDPE) as the sheath component and polypropylene (PP) as the core component, and a bicomponent fiber composed of polypropylene (PP) as the sheath component and polyester (PET) as the core material.

More preferably, the high melting point of the core component is 240-270 °C and the low melting point of the sheath component is 110-180 °C, such that only the sheath component melts and bonds with the reinforcing material at high temperature under pressure.

More preferably, the functional thermoplastic organic fiber forming the reinforcing material is at least one selected from the group consisting of conjugated polyester fiber, conjugated hollow polyester fiber, hollow polyester fiber, double-crimped polyester fiber, nylon 6 and nylon 66.

More preferably, the automobile headliner is a recyclable eco-friendly material.

Hereinafter, the present invention will be described in detail.

The present invention provides an automobile headliner comprising an expanded composite sheet produced by integrally expansion molding a base material, composed of a sheath/core bicomponent fiber, with a reinforcing material composed of a functional thermoplastic organic fiber. More specifically, the base material comprises a sheath/core bicomponent fiber that is produced using a mixture of 30-50 vol% sheath component and 50-70 vol% core component, having a melting point different from that of the sheath component, and that has different melting points and characteristics according to various composition ratios of one or more thermoplastic fibers (PE, PP, PET, CoPET, PA, etc.). Preferably, the sheath/core bicomponent fiber is selected from the group consisting of a bicomponent fiber composed of low-melting-point polyester copolymer as the sheath component and polyester as the core component (hereinafter, referred to as "CoPET/PET"), a composite component composed of polyester glycol as the sheath component and polyester as the core component (hereinafter, referred to as "PETG/PET"), a bicomponent fiber composed of high-density polyethylene as the sheath component and polyester as the core component (hereinafter, referred to as "HDPE/PET"), a bicomponent fiber composed of high-density polyethylene as the sheath component and polypropylene as the core component (hereinafter, referred to as "HDPE/PP"), and a bicomponent fiber composed of polypropylene as the sheath component and polyester as the core material (hereinafter, referred to as "HDPE/PP"). The functional thermoplastic organic fiber forming the reinforcing material is preferably at least one selected from the group consisting of conjugated polyester (PET) fiber, conjugated hollow polyester (PET) fiber, hollow polyester fiber, double-crimped polyester (PET) fiber, nylon 6, and nylon 66.

In the inventive automobile headliner, the content of the base material is 40-70 wt%, and the content of the reinforcing material is 30-60 wt%. Preferably, the content of the base material is 40-60 wt%, and the content of the reinforcing material is 40-60 wt%. More preferably, the content of the base material is 50-60 wt%, and the content of the reinforcing material is 40-50 wt%.

More preferably, the weight ratio of the base material to the reinforcing material is 50:50 or 60:40.

In the present invention, the base material is composed of a generally used thermoplastic fiber having a melting point lower than 180 °C or a thermoplastic organic fiber having high crystal orientation, that is, a sheath/core bicomponent fiber produced by spinning a mixture of a sheath component and 60-80% core component, having a melting point different from that of the sheath component, in which the melting point of the sheath component is not higher than 180 °C, and the melting point of the core component is not lower than 240 °C, which is higher than that of the sheath component. Preferably, the melting point of the sheath component is 110-180 °C, and the melting point of the core component is 240-270 °C. Herein, the sheath/core bicomponent fiber is a fiber prepared such that the content of the sheath component serving as a binder is 30-50 vol% and the content of the core component is 50-70 vol%, and preferably, the volume ratio of the core component: the sheath component is 70/30, 60/40 or 50/50 v/v%. Accordingly, due to the application of a temperature of 180-230 °C upon the manufacture of the composite sheet, only the sheath component is slowly melted to form a three-dimensional network structure by bonding with the reinforcing fiber, and the core component has a characteristic of being capable of preventing degradation in physical properties, due to the partial heat shielding effect of the sheath component, so that it can serve as a reinforcing fiber.

In the present invention, the organic fiber used as the reinforcing material is at least one selected from the group consisting of conjugated polyester fiber, conjugated hollow polyester fiber, hollow polyester fiber, double-crimped polyester fiber, nylon 6 and nylon 66.

The conjugated polyester (PET) fiber is a fiber having a self-crimping property for bulkiness and expandability, the fiber being prepared by combining two kinds of thermoplastic components having different viscosities in a side-by-side manner, spinning the combined resins and elongating the spun material, such that it is self-crimped by the difference in viscosity between the two components.

The conjugate hollow PET fiber and the hollow PET fiber are self-crimping and hollow so as to improve thermal insulation, sound absorption, impact resistance, expandability and bulkiness. Herein, the hollow ratio is 10-50% based on the total cross-sectional area. Particularly, since the conjugated hollow PET fiber has a self-crimping property caused by thermal elongation, it has excellent resistance to external heat applied upon the manufacturing of the composite sheet and can prevent a change in physical properties thereof at a processing temperature of 180-230 °C due to heat dispersion effect that owes to its hollowness. In other words, only the outer layer, corresponding to 30-50 vol% of the sheath/core fiber used as the base material, functions as an adhesive that holds the reinforcing fiber, and the inner layer forms a three-dimensional network structure serving as the reinforcing fiber that imparts shape stability.

Also, the double-crimpled PET fiber has a size of 60-80 mm and is produced by double crimpling polyester fiber so as to make the product bulky.

In the present invention, only thermoplastic fibers are used, in order to ensure light weight and recyclability. Also, the thermoplastic composite sheet has a bulky porous network structure of 4-8 mm and thus is formed in a lightweight simple structure. Also, because the sheath component of the sheath/core bicomponent fiber used as the base material has a low melting point, the inventive automobile headliner can be adhered without the use of any adhesive harmful to the human body, as has been used in the prior art, and thus is eco-friendly.

In the present invention, the base material fiber and the reinforcing material fiber, which are in a compressed state, are split, uniformly mixed and passed through a cylindrical card machine to form thin fibrous webs which are bonded by needle punching so as to manufacture nonwoven fabric.

The nonwoven fabric is molded in a mold for automobile headliners. Alternatively, this nonwoven fabric is manufactured into a composite sheet in a continuous composite sheet making apparatus constructed to conduct serial processes of preheating, thermal bonding, pressing, cooling, expansion, and cutting, and the manufactured composite sheet is molded in a mold.

More specifically, staple fibers (base material fiber and reinforcing fiber; 50-80 mm) given with 8-12 crimps/inch are split by the fiber splitting cylinder of a fiber splitting machine, and the split fibers are dispersed and mixed in a dispersing machine. The mixed fibers are passed through a webber machine for improving physical properties thereof (i.e., tensile strength or impact strength) in order to manufacture a random uniaxial composite fiber sheet. The mixed fibers are passed through a cylindrical card machine to form a thin fibrous web which is then subjected to a doubling step so as to form a multilayer web. The multilayer web is transported by a conveyor belt via a pressing roller to a needle punching machine so as to form nonwoven fabric.

The composite nonwoven fabric manufactured by needling punching is molded directly in a mold for automobile headliners or transported to a continuous composite sheet making apparatus. The continuous composite sheet making apparatus comprises first and second preheating zones for preheating and thermal bonding, first, second and third heating/pressing zones, an expansion zone, a cooling zone and a cutting section. The nonwoven fabric is preheated through the first and second preheating zone, and melted and pressed through the pressing rollers of the heating/pressing zones so as to form a composite sheet having a given thickness. The composite sheet is expanded and cooled in the expansion/cooling zones and then cut. The cut sheet is molded in a mold for automobile headliners, thus manufacturing the automobile headliner according to the present invention.

### Advantageous Effects

As described above, the present invention provides an automobile headliner that shows the same thermal resistance, impact resistance, sound absorption and thermal insulation as those of the prior automobile headliner by comprising the expanded composite sheet composed of a multilayer structure of low-density lightweight material, and at the same time, has improved noise absorption, thermal insulation, etc., compared to the prior automobile headliner, due to the use of a novel composition ratio.

Also, the inventive automobile headliner has improved sound absorption and thermal insulation compared to the prior automobile headliner by utilizing the functional thermoplastic organic fiber having excellent elasticity and expandability. Also, the inventive automobile headliner has excellent impact absorption and elasticity due to the use of the expanded base material and comprises the substrate bonded to a covering material using the difference in melting points and without using any separate adhesive harmful to the human body. Also, the inventive automobile headliner has useful effects in terms of improvement of the working environment and the maintenance of human health due to the use of eco-friendly recyclable materials in place of the prior thermosetting material and inorganic fiber.

### Best Mode for Carrying Out the Invention

Hereinafter, the present invention will be described in further detail with reference to examples.

### Examples 1 to 4

A sheath/core bicomponent fiber (CoPET/PET fiber; Huvis Corp.) as a base material and a conjugate hollow PET fiber (CH-PET; Huvis Corp.) as a reinforcing material were uniformly mixed with each other such than the weight ratio of the base material (CoPET/PET): the reinforcing material (CH-PET) was 70/30 (Example 1), 60/40 (Example 2), 50/50 (Example 3) or 40/60 (Example 4).

The mixed fibers were passed through a cylindrical card machine to form thin fibrous webs which were then bonded by needle punching so as to manufacture nonwoven fabrics. The nonwoven fabrics were molded directly in a mold for automobile headliners. Alternatively, the nonwoven fabrics were manufactured into a composite sheet in a continuous composite sheet making apparatus constructed to conduct serial processes of preheating, thermal bonding, pressing, cooling, expansion and cutting, and the manufactured composite sheet was molded in a mold so as to manufacture an automobile headliner having a weight of 1200 g/m² and a thickness of 6 mm. The above-manufactured automobile headliner was tested for performance in the following manner.

### Test conditions

According to the OHS-005 test method, test samples were taken from the automobile headliner in the machine direction (MD) and cross machine direction (CMD), and the sagging of the test sample was recorded in mm. In acceptable standards for sagging, it is known that less than 10 mm is generally the desired value. The test allows the examination of dimensional stability related with the thermal resistance, low-temperature resistance and moisture resistance of the automobile headliner.

### Comparative Examples 1 to 3

To confirm the specificity (stability according to environmental test) of the inventive automobile headliner, an automobile headliner was manufactured in the same manner as in Examples 1 to 4, except that the weight ratio of the base material (CoPET/PET): the reinforcing material (CH-PET) was 90/10 (Comparative Example 1), 80/20 (Comparative Example 2) or 30/70 (Comparative Example 3). After 24 hours, the sample was measured for sagging.

The results are shown in Table 1 below together with the results of Examples 1 to 4.

**Table 1**

| Example/Comparative Example Nos. | Ratio of base material (CoPET/PET)/reinforcin g material (CH-PET) | Sag (mm) | |
|---|---|---|---|
| | | Machine direction (MD) | Cross machine direction (AMD) |
| Comparative Example 1 | 90/10 | 31.5 | 41.2 |
| Comparative Example 2 | 80/20 | 19.5 | 27.4 |
| Example 1 | 70/30 | 9.1 | 10.0 |
| Example 2 | 60/40 | 5.5 | 8.8 |
| Example 3 | 50/50 | 7.7 | 9.3 |
| Example 4 | 40/60 | 8.3 | 10.4 |
| Comparative Example 3 | 30/70 | 23.1 | 33.5 |

As can be seen in Table 1, when the weight ratio of the base material (CoPET/PET): the reinforcing material (CH-PET) in the inventive automobile headliner was 70/30 (Example 1), 60/40 (Example 2), 50/50 (Example 3) or 40/60 (Example 4), the sagging was found to be not greater than 10 mm, which is known as the generally acceptable standard, whereas, when the weight ratio of the base material (CoPET/PET): the reinforcing material (CH-PET) was 90/10 (Comparative Example 1), 80/20 (Comparative Example 2) or 30/70 (Comparative Example 3), the sagging was shown to be greater than 10 mm, which is known as the generally acceptable standard.

Accordingly, it could be found that, in the case of using CoPET as a base material and CH-PET as a reinforcing material, when the weight ratio of CoPET/PET : CH-PET is 70/30 (Example 1), 60/40 (Example 2), 50/50 (Example 3) or 40/60 (Example 4), it will show good results in the environmental test.

### Examples 5 to 8

An automobile headliner was manufactured in the same manner as in Examples 1 to 4, except that a sheath/core bicomponent fiber (CoPET/PET fiber; Huvis corp.) was used as the base material, a mixture of conjugate hollow PET (CH-PET) fiber and double-crimped PET fiber (DC-PET fiber) was used as the reinforcing material, and the weight ratio of CoPET/PET : CH-PET : DC-PET was 60/35/5 (Example 5), 55/35/10 (Example 6), 50/40/10 (Example 7) or 50/20/30 (Example 8). A test sample was prepared in the same manner in Examples 1-4, and after 24 hours, measured for sagging.

### Comparative Examples 4 to 6

To confirm the specificity (stability according to environmental test) of the inventive automobile headliner, an automobile headliner was manufactured in the same manner as in Examples 5 to 8, except that the weight ratio of CoPET/PET : CH-PET : DC-PET was 65/25/10 (Comparative Example 4), 45/45/10 (Comparative Example 5) or 40/50/10 (Comparative Example 6). After 24 hours, the sample was measured for sagging.

The results are shown in Table 2 below together with the results of Examples 5 to 8.

**Table 2**

| Example/Comparative Example Nos. | Ratio of base material (CoPET/PET)/reinforcing material (CH-PET/DC-PET) | Sag (mm) | |
|---|---|---|---|
| | | Machine direction (MD) | Cross machine direction (AMD) |
| Comparative Example 4 | 65/25/10 | 23.4 | 39.5 |
| Example 5 | 60/35/5 | 9.7 | 10.5 |
| Example 6 | 55/35/10 | 8.3 | 10.0 |
| Example 7 | 50/40/10 | 7.6 | 9.4 |
| Example 8 | 50/20/30 | 8.9 | 9.7 |
| Comparative Example 5 | 45/45/10 | 14.6 | 19.6 |
| Comparative Example 6 | 40/50/10 | 28.2 | 34.3 |

As can be seen in Table 1, when the weight ratio of CoPET/PET : CH-PET : DC-PET was 60/35/5 (Example 5), 55/35/10 (Example 6), 50/40/10 (Example 7) or 50/20/30 (Example 8), the sagging was found to be not greater than 10 mm, which is known as the generally acceptable standard, whereas, when the weight ratio of CoPET/ PET : CH-PET : DC-PET was 65/25/10 (Comparative Example 4), 45/45/10 (Comparative Example 5) or 40/50/10 (Comparative Example 6), the sagging was found to be greater than 10 mm, which is known as the generally acceptable standard.

Accordingly, it could be found that, in the case of using CoPET/PET as a base material and CH-PET and DC-PET as a reinforcing material, when the weight ratio of CoPET/PET : CH-PET : DC-PET is 60/35/5 (Example 5), 55/35/10 (Example 6), 50/40/10 (Example 7) or 50/20/30 (Example 8), it will show good results in the environmental test.

### Examples 9 to 12

An automobile headliner was manufactured in the same manner as in Examples 1 to 4, except that a sheath/core bicomponent fiber (PP/PET fiber; Huvis Corp.) was used as a base material, a conjugate hollow fiber (CH-PET fiber; Huvis Corp.) was used as a reinforcing material, and the weight ratio of the base material (PP/PET): the reinforcing material (CH-PET) was 70/30 (Example 9), 60/40 (Example 10), 50/50 (Example 11) or 40/60 (Example 12). A test sample was prepared in the same manner as in Examples 1 to 4, and after 24 hours, measured for sagging.

### Comparative Examples 7 to 9

To confirm the specificity (stability according to environmental test) of the inventive automobile headliner, an automobile headliner was manufactured in the same manner as in Examples 9 to 12, except that the weight ratio of the base material (PP/PET): the reinforcing material (CH-PET) was 90/10 (Comparative Example 7), 80/20 (Comparative Example 8) or 30/70 (Comparative Example 9). After 24 hours, the sample was measured for sagging.

The results are shown in Table 3 below together with the results of Examples 9 to 12.

**Table 3**

| Example/Comparative Example Nos. | Ratio of base material (PP/PET)/reinforcing material (CH-PET) | Sag (mm) | |
|---|---|---|---|
| | | Machine direction (MD) | Cross machine direction (AMD) |
| Comparative Example 7 | 90/10 | 31.3 | 46.3 |
| Comparative Example 8 | 80/20 | 17.7 | 26.7 |
| Example 9 | 70/30 | 10.3 | 17.1 |
| Example 10 | 60/40 | 5.9 | 8.1 |
| Example 11 | 50/50 | 7.4 | 9.3 |
| Example 12 | 40/60 | 8.3 | 10.0 |
| Comparative Example 9 | 30/70 | 19.8 | 24.1 |

As can be seen in Table 3, when the weight ratio of the base material (PP/PET): the reinforcing material (CH-PET) in the inventive automobile headliner was 60/40 (Example 10), 50/50 (Example 11) or 40/60 (Example 12), the sagging was found to be not greater than 10 mm, which is known as the generally acceptable standard, whereas, when the weight ratio of the base material (PP/PET): the reinforcing material (CH-PET) was 90/10 (Comparative Example 7), 80/20 (Comparative Example 9) or 30/70 (Comparative Example 9), the sagging was found to be greater than 10 mm, which is known as the generally acceptable standard.

Accordingly, it could be found that, in the case of using PP/PET as a base material and CH-PET as a reinforcing material, when the weight ratio of PP/PET : CH-PET is 60/40 (Example 10), 50/50 (Example 11) or 40/60 (Example 12), it will show good results in the environmental test.

### Examples 13 to 16

An automobile headliner was manufactured in the same manner as in Examples 1 to 4, except that a sheath/core bicomponent fiber (PP/PET fiber; Huvis corp.) was used as the base material, a mixture of conjugate hollow PET (CH-PET) fiber and double-crimped PET fiber (DC-PET) was used as the reinforcing material, and the weight ratio of PP/PET : CH-PET : DC-PET was 60/35/5 (Example 13), 55/35/10 (Example 14), 50/40/10 (Example 15) or 50/20/30 (Example 16). A test sample was prepared in the same manner in Examples 1-4, and after 24 hours, measured for sagging.

### Comparative Examples 10 to 12

To confirm the specificity (stability according to environmental test) of the inventive automobile headliner, an automobile headliner was manufactured in the same manner as in Examples 13 to 16, except that the weight ratio of PP/PET : CH-PET : DC-PET was 65/25/10 (Comparative Example 10), 45/45/10 (Comparative Example 11) or 40/50/10 (Comparative Example 12). After 24 hours, the sample was measured for sagging.

The results are shown in Table 4 below together with the results of Examples 13 to 16.

**Table 4**

| Example/Comparative Example Nos. | Ratio of base material(PP/PET)/reinfor cing material (CH-PET/DC-PET) | Sag (mm) | |
|---|---|---|---|
| | | Machine direction (MD) | Cross machine direction (AMD) |
| Comparative Example 10 | 65/25/10 | 17.2 | 28.4 |
| Example 13 | 60/35/5 | 7.7 | 9.8 |
| Example 14 | 55/35/10 | 6.5 | 8.7 |
| Example 15 | 50/40/10 | 8.5 | 10.0 |
| Example 16 | 50/20/30 | 13.5 | 17.4 |
| Comparative Example 11 | 45/45/10 | 17.4 | 20.2 |
| Comparative Example 12 | 40/50/10 | 22.7 | 27.8 |

As can be seen in Table 4, when the weight ratio of PP/PET : CH-PET : DC-PET was 60/35/5 (Example 13), 55/35/10 (Example 14) or 50/40/10 (Example 15), the sagging was found to be not greater than 10 mm, which is known as the generally acceptable standard, whereas, when the weight ratio of CoPET/PET : CH-PET : DC-PET was 65/25/10 (Comparative Example 10) or 40/50/10 (Comparative Example 12), the sagging was found to be greater than 10 mm, which is known as the generally acceptable standard.

Accordingly, it could be found that, in the case where PP/PET is used as a base material and a mixture of CH-PET and DC-PET is used as a reinforcing material, when the weight ratio of the base material (PP/PET) : the reinforcing material (CH-PET[] DC-PET) is 60/35/5 (Example 13), 55/35/10 (Example 14) or 50/40/10 (Example 15), it will show good results in the environmental test.

### Examples 17 to 20

An automobile headliner was manufactured in the same manner as in Examples 1 to 4, except that a sheath/core bicomponent fiber (HDPE/PET fiber; Huvis Corp.) was used as a base material, a conjugate hollow fiber (CH-PET; Huvis Corp.) was used as a reinforcing material, and the weight ratio of the base material (HDPE/PET): the reinforcing material (CH-PET) was 70/30 (Example 17), 60/40 (Example 18), 50/50 (Example 19) or 40/60 (Example 20). A test sample was prepared in the same manner as in Examples 1 to 4, and after 24 hours, measured for sagging.

### Comparative Examples 13 to 15

To confirm the specificity (stability according to environmental test) of the inventive automobile headliner, an automobile headliner was manufactured in the same manner as in Examples 17 to 20, except that the weight ratio of the base material (HDPE/PET): the reinforcing material (CH-PET) was 90/10 (Comparative Example 13), 80/20 (Comparative Example 14) or 30/70 (Comparative Example 15). After 24 hours, the sample was measured for sagging.

The results are shown in Table 5 below together with the results of Examples 17 to 20.

**Table 5**

| Example/Comparative Example Nos. | Ratio of (HDPE/PET)/reinforci ng material (CH-PET) | Sag (mm) | |
|---|---|---|---|
| | | Machine direction (MD) | Cross machine direction (AMD) |
| Comparative Example 13 | 90/10 | 54.6 | 72.3 |
| Comparative Example 14 | 80/20 | 33.6 | 50.6 |
| Example 17 | 70/30 | 17.8 | 23.1 |
| Example 18 | 60/40 | 8.3 | 9.6 |
| Example 19 | 50/50 | 9.8 | 11.5 |
| Example 20 | 40/60 | 15.5 | 23.1 |
| Comparative Example 15 | 30/70 | 33.4 | 49.5 |

As can be seen in Table 5, when the weight ratio of the base material (HDPE/PET): the reinforcing material (CH-PET) in the inventive automobile headliner was 60/40 (Example 18), and 50/50 (Example 19), the sagging was shown to be not greater than 10 mm, which is known as the generally acceptable standard, whereas, when the weight ratio of the base material (HDPE/PET): the reinforcing material (CH-PET) was 90/10 (Comparative Example 13), 80/20 (Comparative Example 14) or 30/70 (Comparative Example 15), the sagging was shown to be greater than 10 mm, which is known as the generally acceptable standard.

Accordingly, it could be found that, in the case of using HDPE/PET as a base material and CH-PET as a reinforcing material, when the weight ratio of HDPE/PET) : CH-PET is 60/40 (Example 18) or 50/50 (Example 19), it will show good results in the environmental test.

### Examples 21 to 24

An automobile headliner was manufactured in the same manner as in Examples 1 to 4, except that a sheath/core bicomponent fiber (HDPE/PET fiber; Huvis corp.) was used as the base material, a mixture of conjugate hollow PET (CH-PET) fiber and double-crimped PET fiber (DC-PET) was used as the reinforcing material, and the weight ratio of HDPE/PET : CH-PET : DC-PET was 60/35/5 (Example 21), 55/35/10 (Example 22), 50/40/10 (Example 23) or 50/20/30 (Example 24). A test sample was prepared in the same manner in Examples 1-4, and after 24 hours, measured for sagging.

### Comparative Examples 16 to 18

To confirm the specificity (stability according to environmental test) of the inventive automobile headliner, an automobile headliner was manufactured in the same manner as in Examples 21 to 24, except that the weight ratio of HDPE/PET : CH-PET
: DC-PET was 65/25/10 (Comparative Example 16), 45/45/10 (Comparative Example 17) or 40/50/10 (Comparative Example 18). After 24 hours, the sample was measured for sagging.

The results are shown in Table 6 below together with the results of Examples 21 to 26.

**Table 6**

| Example/Comparative Example Nos | Ratio of base material (HDPE/PET)/reinforcing material (CH-PET/DC-PET) | Sag (mm) | |
|---|---|---|---|
| | | Machine direction (MD) | Cross machine direction (AMD) |
| Comparative Example 16 | 65/25/10 | 23.1 | 39.1 |
| Example 21 | 60/35/5 | 8.5 | 9.2 |
| Example 22 | 55/35/10 | 8.9 | 10.0 |
| Example 23 | 50/40/10 | 7.6 | 8.8 |
| Example 24 | 50/20/30 | 10.1 | 14.5 |
| Comparative Example 17 | 45/45/10 | 17.2 | 23.9 |
| Comparative Example 18 | 40/50/10 | 26.3 | 38.2 |

As can be seen in Table 6, when the weight ratio of HDPE/PET : CH-PET : DC-PET was 60/35/5 (Example 21), 55/35/10 (Example 22) or 50/40/10 (Example 23), the sagging was shown to be not greater than 10 mm, which is known as the generally acceptable standard, whereas, when the weight ratio of HDPE/PET : CH-PET : DC-PET was 65/25/10 (Comparative Example 16), 45/45/10 (Comparative Example 17) or 40/50/10 (Comparative Example 18), the sagging was shown to be greater than 10 mm, which is known as the generally acceptable standard.

Accordingly, it could be found that, in the case where HDPE/PET is used as a base material and a mixture of CH-PET and DC-PET is used as a reinforcing material, when the weight ratio of HDPE/PET : CH-PET : DC-PET is 60/35/5 (Example 21), 55/35/10 (Example 22) or 50/40/10 (Example 23), it will show good results in the environmental test.

### Examples 25 to 28

An automobile headliner was manufactured in the same manner as in Examples 1 to 4, except that a sheath/core bicomponent fiber (CoPET/PET fiber; Huvis Corp.) was used as a base material, a conjugate hollow fiber (CH-PET; Huvis Corp.) was used as a reinforcing material, the weight ratio of the base material (CoPET/PET): the reinforcing material (CH-PET) was 70/30 (Example 25), 60/40 (Example 26), 50/50 (Example 27) or 40/60 (Example 28), and a polyester (PET) scrim was attached to both sides of the prepared substrate. A test sample was prepared in the same manner as in Examples 1 to 4, and after 24 hours, measured for sagging. The weight of the PET scrim was 45 g/cm².

### Comparative Examples 19 to 22

To confirm the specificity (stability according to environmental test) of the inventive automobile headliner, an automobile headliner was manufactured in the same manner as in Examples 25 to 28, except that the weight ratio of the base material (CoPET/PET): the reinforcing material (CH-PET) was 70/30 (Comparative Example 19), 60/40 (Comparative Example 20), 50/50 (Comparative Example 21) or 40/60 (Comparative Example 15), and the polyester scrim was not attached to both sides of the resulting substrate. After 24 hours, the sample was measured for sagging.

The results are shown in Table 7 below together with the results of Examples 25 to 28.

**Table 7**

| Example Nos. | Ration of base material (CoPET/PET)/reinf orcing material (CH-PET) | PET Scrim | Sag (mm) | |
|---|---|---|---|---|
| | | | Machine direction (MD) | Cross machine direction (AMD) |
| Comparative Example 19 | 70:30 | without | 9.1 | 10.0 |
| Example 25 | 70:30 | with | 8.5 | 9.9 |
| Comparative Example 20 | 60:40 | without | 5.5 | 8.8 |
| Example 26 | 60:40 | with | 4.3 | 5.8 |
| Comparative Example 21 | 50:50 | without | 7.7 | 9.3 |
| Example 27 | 50:50 | with | 5.7 | 8.0 |
| Comparative Example 22 | 40:60 | without | 8.3 | 10.4 |
| Example 28 | 40:60 | with | 7.8 | 9.7 |

As can be seen in Table 7, attaching the polyester scrim to both sides of the headliner not only improves the appearance, sound absorption and mechanical properties of the product, but also reduces sagging in the environmental test.

The present invention is not limited only to the above Examples. Even if PETG/ PET, HDPE/PP or the like, which have the same properties as those of said base materials, are used, the same effect can be obtained. Also, even when conjugate PET, hollow PET or polyamide fiber, such as nylon 6 or nylon 66 is used in place of the conjugate hollow PET or double-crimped PET as the reinforcing material as described above, the same effect can be obtained.

## Claims

1. An automobile headliner comprising an expanded composite sheet formed by integrally expansion molding a base material, comprising a sheath-core bicomponent fiber composed of a high-melting-point core component and a low-melting-point sheath component, with a reinforcing make composed of a functional thermoplastic organic fiber,
wherein content of the base material is 40-70 wt%, and content of the reinforcing material is 30-60 wt%.

2. The automobile headliner of Claim 1, wherein content of the base material is 40-50 wt%, and content of the reinforcing material is 40-60 wt%.

3. The automobile headliner of Claim 1, wherein content of the base material is 50-60 wt%, and content of the reinforcing material is 40-50 wt%.

4. The automobile headliners of Claim 1, wherein a weight ratio of the base material
: the reinforcing material is 50:50 or 60:40.

5. The automobile headliner of Claim 1, wherein a polyester scrim is adhered to both sides of the automobile headliner.

6. The automobile headliner of any one of Claims 1 to 4, wherein the sheath-core bicomponent fiber is a bicomponent fiber produced by spinning a mixture of 30-50 vol% of the sheath component and 50-70 vol% of the core component, having a melting point different from that of the sheath component, and is at least one selected from the group consisting of a bicomponent fiber composed of low-melting-point polyester copolymer as the sheath component and polyester as the core component, a bicomponent fiber composed of polyester glycol as the sheath component and polyester as the core component, a bicomponent fiber composed of high-density polyethylene as the sheath component and polyester as the core component, a bicomponent fiber composed of high-density polyethylene as the sheath component and polypropylene as the com component, and a bicomponent fiber composed of polypropylene as the sheath component and polyester as the core component.

7. The automobile headliner of Claim 1, wherein the melting point of the core component is 240-270 °C and the melting point of the sheath component is 110-180 °C, such that only the sheath component melts and bonds with the reinforcing material at high temperature under pressure.

8. The automobile headliner of Claim 1, wherein the functional thermoplastic organic fiber forming, the reinforcing material is at least one selected from the group consisting of conjugated polyester fiber, conjugated hollow polyester fiber, hollow polyester fiber, double-crimped polyester fiber, nylon 6 and nylon 66.

9. The automobile headliner of Claim 1, wherein the automobile headliner is a recyclable eco-friendly material.

## Patentansprüche

1. Kraftfahrzeug-Himmel, umfassend eine expandierte Verbundfolie, gebildet durch Integralschaum-Formgebung eines Grundmaterials, das eine Mantel-Kern-Zweikomponentenfaser aus einer Kernkomponente mit hohen Schmelzpunkt und einer Mantelkomponente mit niedrigem Schmelzpunkt umfasst, zusammen mit einem Verstärkungsmaterial aus einer funktionellen, thermoplastischen, organischen Faser, wobei der Anteil des Grundmaterials 40-70 Gew.-% und der Anteil des Verstärkungsmaterials 30-60 Gew.-% beträgt.

2. Kraftfahrzeug-Himmel nach Anspruch 1, wobei der Anteil des Grundmaterials 40-60 Gew.-% und der Anteil des Verstärkungsmaterials 40-60 Gew.-% beträgt.

3. Kraftfahrzeug-Himmel nach Anspruch 1, wobei der Anteil des Grundmaterials 50-60 Gew.-% und der Anteil des Verstärkungsmaterials 40-50 Gew.-% beträgt.

4. Kraftfahrzeug-Himmel nach Anspruch 1, wobei das Gewichtsverhältnis von Grundmaterial zu Verstärkungsmaterial 50:50 oder 60:40 beträgt.

5. Kraftfahrzeug-Himmel nach Anspruch 1 bis 4, wobei ein Polyester-Gittergewebe auf beiden Seiten des Kraftfahrzeug-Himmels haftet.

6. Kraftfahrzeug-Himmel nach Anspruch 1 bis 4, wobei es sich bei der Mantel-Kern-Zweikomponentenfaser um eine Zweikomponentenfaser handelt, die durch Spinnen eines Gemisches aus 30-50 Vol-% Mantelkomponente und 50-70 Vol-% Kernkomponente gebildet worden ist, einen Schmelzpunkt aufweist, der sich vom Schmelzpunkt der Mantelkomponente unterscheidet und es sich dabei um mindestens einen Bestandteil aus der Gruppe handelt, die aus einer Zweikomponentenfaser aus einem Polyester-Copolymeren mit niedrigem Schmelzpunkt als Mantelkomponente und Polyester als Kernkomponente, einer Zweikomponentenfaser aus Polyesterglykol als Mantelkomponente und Polyester als Kernkomponente, einer Zweikomponentenfaser aus Polyethylen hoher Dichte als Mantelkomponente und Polyester als Kernkomponente, einer Zweikomponentenfaser aus Polyethylen hoher Dichte als Mantelkomponente und Polypropylen als Kernkomponente und einer Zweikomponentenfaser aus Polypropylen als Mantelkomponente und Polyester als Kernkomponente besteht.

7. Kraftfahrzeug-Himmel nach Anspruch 1, wobei der Schmelzpunkt der Kernkomponente 240-270 °C beträgt und der Schmelzpunkt der Mantelkomponente 110-180 °C beträgt, so dass bei hoher Temperatur unter Druck nur die Mantelkomponente schmilzt und eine Bindung mit dem Verstärkungsmaterial eingeht.

8. Kraftfahrzeug-Himmel nach Anspruch 1, wobei es sich bei der funktionellen, thermoplastischen, organischen Faser, die das Verstärkungsmaterial bildet, um mindestens einen Bestandteil handelt, der aus der Gruppe ausgewählt ist, die aus einer konjugierten Polyesterfaser, einer konjugierten Polyesterhohlfaser, einer Polyesterhohlfaser, einer doppelt gecrimpten Polyesterfaser, Nylon 6 und Nylon 66 besteht.

9. Kraftfahrzeug-Himmel nach Anspruch 1, wobei es sich beim Kraftfahrzeug-Himmel um ein wiedergewinnbares, umweltfreundliches Material handelt.

## Revendications

1. Garniture de toit automobile comprenant une feuille composite expansée fabriquée par moulage par expansion intégral d'un matériau de base, comprenant une fibre gaine-coeur à deux composantes composée d'une composante centrale à point de fusion élevé et d'une composante externe à point de fusion bas, avec un matériau de renfort composé d'une fibre organique thermoplastique fonctionnelle,
dans laquelle la concentration du matériau de base est de 40 à 70 % en poids et la concentration du matériau de renfort est de 30 à 60 % en poids.

2. Garniture de toit automobile selon la revendication 1, dans laquelle la concentration du matériau de base est de 40 à 60 % en poids et la concentration du matériau de renfort est de 40 à 60 % en poids.

3. Garniture de toit automobile selon la revendication 1, dans laquelle la concentration du matériau de base est de 50 à 60 % en poids et la concentration du matériau de renfort est de 40 à 50 % en poids.

4. Garniture de toit automobile selon la revendication 1, dans laquelle le rapport pondéral matériau de base/matériau de renfort est de 50/50 ou de 60/40.

5. Garniture de toit automobile selon la revendication 1, dans laquelle on colle un film de renfort en polyester des deux côtés de la garniture de toit automobile.

6. Garniture de toit automobile selon l'une quelconque des revendications 1 à 4, dans laquelle la fibre gaine-coeur à deux composantes est une fibre à deux composantes fabriquée par rotation d'un mélange de 30 à 50 % en volume de la composante externe et de 50 à 70 % en volume de la composante centrale, dont le point de fusion est différent de celui de la composante externe, et est au moins une fibre choisie dans le groupe composé d'une fibre à deux composantes composée d'un copolymère de polyester à point de fusion bas en tant que composante externe et de polyester en tant que composante centrale, d'une fibre à deux composantes composée de polyester glycol en tant que composante externe et de polyester en tant que composante centrale, d'une fibre à deux composantes composée de polyéthylène haute densité en tant que composante
externe et de polyester en tant que composante centrale, d'une fibre à deux composantes composée de polyéthylène haute densité en tant que composante externe et de polypropylène en tant que composante centrale, et d'une fibre à deux composantes composée de polypropylène en tant que composante externe et de polyester en tant que composante centrale.

7. Garniture de toit automobile selon la revendication 1, dans laquelle le point de fusion de la composante centrale est de 240 à 270 °C et le point de fusion de la composante externe est de 110 à 180 °C, de telle sorte que seule la composante externe fond et se lie au matériau de renfort à haute température sous pression.

8. Garniture de toit automobile selon la revendication 1, dans laquelle la fibre organique thermoplastique fonctionnelle formant le matériau de renfort est au moins une fibre choisie dans le groupe composé d'une fibre en polyester conjugué, d'une fibre en polyester creux conjugué, d'une fibre en polyester creux, d'une fibre en polyester double ondulation, du nylon 6 et du nylon 66.

9. Garniture de toit automobile selon la revendication 1, dans laquelle la garniture de toit automobile est un matériau recyclable écologique.
